# FASCICULE DE BREVET EUROPEEN

(11) **EP 1 231 049 B1**
(45) Date de publication et mention de la délivrance du brevet: **14.03.2007**
(21) Numéro de dépôt: 02001861.0
(22) Date de dépôt: 28.01.2002
(51) Int. Cl.: B29D 30/16, B29D 30/70

(54) **Appareil a bras oscillant unique, pour la fabrication d'un renfort de pneumatique a partir d'un seul fil**
Schwingarmvorrichtung zur Herstellung einer Reifenverstärkungsstruktur mit einem einzigen Reifenkord
Swing arm apparatus for manufacturing a tyre reinforcing structure using a single thread

(30) Priorité: 07.02.2001 FR 0101747
(43) Date de publication de la demande: 14.08.2002
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: Mayet, Jean-Claude, 63000 Clermont-Ferrand (FR)
(74) Mandataire: Bauvir, Jacques

(56) Documents cités:
- EP-A- 0 962 304
- EP-A- 1 122 055
- GB-A- 179 312

## Description

La présente invention concerne la fabrication des pneumatiques. Plus précisément, elle se rapporte à la mise en place de fils pour constituer un renforcement du pneumatique. Plus particulièrement, elle propose des moyens aptes à fabriquer un tel renforcement sur une forme proche ou identique de la forme de la cavité interne du pneumatique, c'est à dire une forme sensiblement toroïdale, supportant l'ébauche d'un pneumatique pendant sa fabrication.

Dans ce domaine technique, on connaît déjà des procédés et appareils qui permettent d'intégrer la fabrication des renforcements de pneumatique à l'assemblage du pneumatique lui-même. Cela signifie que, plutôt que de recourir à des produits semi-finis, comme des nappes de renforcement, on réalise un ou des renforcements in situ, au moment où l'on fabrique le pneumatique, et à partir d'une seule bobine de fil. Parmi ces procédés et appareils, la solution décrite dans la demande de brevet EP 0 580 055 est tout particulièrement adaptée pour la réalisation de renforcements de carcasse sur un noyau rigide dont la surface extérieure correspond sensiblement à la forme de la cavité interne du pneumatique final. On y voit un appareillage dans lequel le fil, destiné à constituer un renforcement de carcasse, est posé en arceaux contigus sur un noyau rigide, par un oeilleton fixé sur une chaîne montée sur des poulies de façon à entourer le noyau en formant une sorte de « C ». L'oeilleton effectue un mouvement de va-et-vient autour du noyau de façon à poser, progressivement et de façon contiguë, un arceau à chaque aller et un arceau à chaque retour, avec intervention de presseurs appropriés pour appliquer les extrémités desdits arceaux au fur et à mesure sur le noyau rigide, pré-revêtu de caoutchouc cru.

Par la demande de brevet EP 0 962 304, on connaît un appareil prévu lui aussi pour la réalisation de renforcements de carcasse sur un noyau rigide dont la surface extérieure correspond sensiblement à la forme de la cavité interne du pneumatique final. Dans une première variante, on y voit un bras oscillant unique dont l'extrémité, supportant un organe de guidage comparable à l'oeilleton évoqué ci-dessus, décrit nécessairement des arcs de cercle. On peut se reporter à la figure 3 de ladite demande de brevet EP 0 962 304.

Cependant, avec un bras oscillant unique tel que proposé dans la demande de brevet EP 0 962 304, il est n'est pas possible d'amener le fil suffisamment prêt de la zone de pose dans chacun des bourrelets. Les dispositifs presseurs utilisés de part et d'autre du noyau pour prendre en charge le fil et le plaquer contre le noyau fonctionnent dès lors sur une course assez grande. Cette course est d'autant plus grande que le bourrelet est axialement fort en retrait par rapport au point du flanc correspondant à la largeur axiale maximale du noyau. Outre le fait que ceci risque de poser des problèmes de précision de dépose, la réalisation des dispositifs presseurs en est rendue plus délicate.

L'objectif de la présente invention est de proposer un appareil capable de fonctionner selon le procédé général décrit dans la demande de brevet EP 0 580 055 précitée, et capable de fonctionner à des cadences importantes sans préjudice de la précision de fonctionnement.

L'invention propose un appareil de fabrication d'un renforcement pour pneumatique, selon la revendication 1.

Le lecteur est invité à consulter la demande de brevet EP 0 580 055 précitée car la présente invention reprend non seulement le procédé qui y est décrit, mais aussi dans une large mesure les presseurs intervenant pour permettre la formation d'une boucle et pour appliquer ladite boucle contre le noyau. Pour rappel, les presseurs comprennent essentiellement chacun une fourche et un marteau. A quelques détails près, l'exemple de réalisation des presseurs qui y est décrit pourrait être repris tel quel, même si l'on propose ci-dessous une nouvelle forme pour lesdits presseurs.

C'est concernant l'animation de l'organe de guidage dans lequel le fil peut coulisser librement (à savoir l'oeilleton), que l'invention apporte les principales différences. Autrement dit, le système à bras oscillant décrit ci-dessous est conçus pour pouvoir prendre la place du système à chaîne décrit dans la demande de brevet EP 0 580 055 précitée.

Notons tout d'abord que, comme dans le brevet cité, le terme "fil" doit bien entendu être compris dans un sens tout à fait général, englobant un monofilament, un multifilament, un assemblage comme par exemple un câble ou un retors, ou un petit nombre de câbles ou retors groupés, et ceci quelle que soit la nature du matériau, et que le "fil" soit pré revêtu de caoutchouc ou non. Dans le présent mémoire, on emploie le terme "arceau" pour désigner un tronçon de fil allant d'un point singulier à un autre dans l'armature de renforcement. L'ensemble de ces arceaux disposés sur tout le pourtour du pneumatique forme le renforcement proprement dit. Un arceau au sens défini ici peut faire partie d'une carcasse, ou d'un renfort de sommet, ou de tout autre type de renforcement. Ces arceaux peuvent être individualisés par une coupe du fil en cours de pose, ou tous reliés entre eux dans le renforcement final, par exemple par des boucles.

Fondamentalement, l'invention traite de la dépose en continu d'un fil de renforcement, dans une configuration aussi proche que possible de la configuration dans le produit final. Le fil étant délivré à la demande par un distributeur approprié comportant par exemple une bobine de fil et le cas échéant un dispositif de contrôle de la tension du fil extrait de la bobine, l'appareil de fabrication d'un renfort à partir d'un seul fil coopère avec une forme (noyau rigide ou une membrane) sur laquelle on fabrique le pneumatique. Il importe peu que le renforcement soit, pour être complet, fabriqué en plusieurs rotations successives de la forme, avec coupe du fil ou non entre deux rotations.

Lorsque l'on définit des positions, des directions ou des sens avec les mots "radialement, axialement, circonférentiellement", ou lorsque l'on parle de rayons, on prend pour repère le noyau sur lequel on fabrique le pneumatique, ou le pneumatique par lui-même. L'axe géométrique de référence est l'axe de rotation de la forme.

De même, comme déjà signalé dans la demande de brevet EP 0 580 055 précitée, les organes de pose du fil décrits ici permettent aussi de réaliser un renforcement, par exemple un renforcement de carcasse, dans lequel le pas de pose du fil est variable. On entend par "pas de pose" la distance résultant de la somme de l'écart entre deux fils adjacents et le diamètre du fil. Il est bien connu que pour un renforcement de carcasse, l'écart entre fils varie selon le rayon auquel on le mesure. Il n'est pas question ici de cette variation, mais bien d'un pas variable à un rayon donné. Il suffit pour cela de, sans changer la cadence de travail de l'organe de guidage, faire varier selon toute loi appropriée la vitesse de rotation de la forme. On obtient ainsi un pneumatique dont les fils de renforcement de carcasse, par exemple pour une carcasse radiale, sont disposés selon un pas présentant une variation contrôlée pour une position radiale donnée.

La suite de la description permet de bien faire comprendre tous les aspects de l'invention, en s'appuyant sur les figures suivantes :
La figure 1 est une perspective montrant un exemple de réalisation d'un appareil selon l'invention ;
La figure 2 est un détail d'un presseur de cet appareil ;
La figure 3 compare l'invention à un état de la technique.

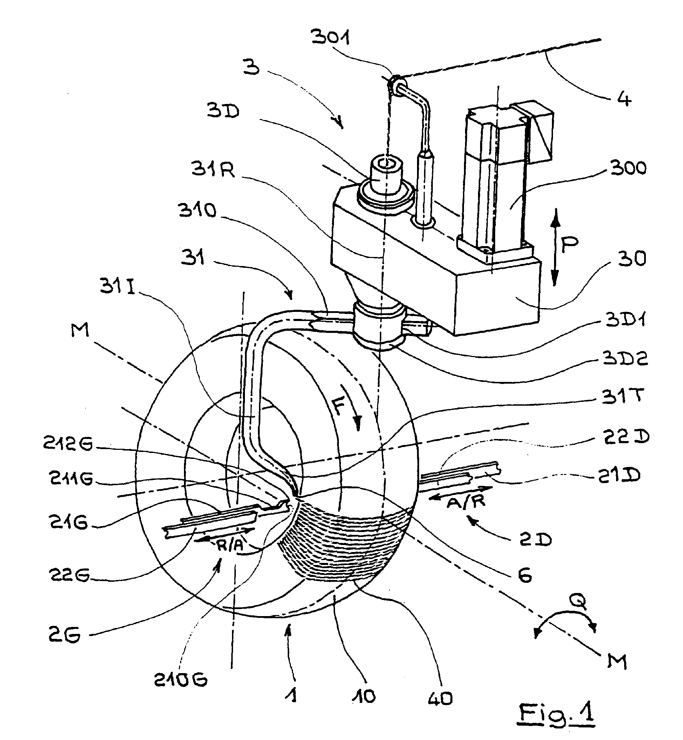

A la figure 1, on voit que la forme est un noyau 1 (rigide et démontable, sans toutefois que ceci soit limitatif) définissant la géométrie de la surface intérieure du pneumatique. Celui-ci est revêtu de caoutchouc 10, par exemple d'une couche de gomme d'étanchéité à base de caoutchouc butyl, et d'une couche de gomme assurant l'enrobage des fils de carcasse. Le caoutchouc 10 recouvrant le noyau 1 permet de retenir des arceaux 40 de fil 4 sur le noyau 1 au fur et à mesure de sa dépose, par un effet de collage. Bien entendu, le noyau 1 est entraîné en rotation par tout dispositif convenable, non représenté.

Les organes de pose 3 proprement dits comportent essentiellement un système à un bras oscillant unique monobloc 31 d'une part, et des dispositifs presseurs 2^{G} et 2^{D} d'autre part. Le bras oscillant unique monobloc 31 est monté sur un arbre oscillant 3D dont on voit l'axe géométrique de rotation 31R. L'axe géométrique de rotation 31R coupe le noyau 1, en position de fonctionnement pour la pose de fil 4 sur le noyau. Le bras oscillant unique monobloc 31 comporte une base 310 orientée sensiblement perpendiculairement à l'axe géométrique de rotation 31R. Le bras oscillant unique monobloc 31 comporte une partie intermédiaire 31I se développant sensiblement parallèlement à l'axe géométrique de rotation, en direction du plan de mouvement. Le bras oscillant unique monobloc 31 comporte un bec 31T à l'extrémité du bras 31 opposée à l'axe géométrique de rotation 31R. Enfin, à l'extrémité du bec 31T, on trouve un orifice 6 remplissant la fonction remplie par l'oeilleton « 33 » dans la demande de brevet EP 0 580 055 précitée. Le bras oscillant unique monobloc 31 est monté sur un passage 3D1 aménagé sur l'arbre 3D, et est immobilisé au moyen d'un flasque 3D2. On dispose ainsi d'une coulisse permettant de modifier la position relative du bras oscillant unique monobloc 31 sur l'arbre 3D, afin de pouvoir régler le rayon R (figure 3) du cercle décrit par l'orifice 6.

L'arbre 3D est monté sur un boîtier 30 comportant un dispositif mécanique de commande, approprié pour transformer le mouvement de rotation d'un moteur 300 en mouvement d'oscillations imprimées audit arbre 3D. Ledit arbre 3D oscille dans les limites d'un arc dont la valeur précise dépend de l'amplitude souhaitée pour le mouvement de l'orifice 6. Le dispositif de commande, du genre à bielle et manivelle ou tout autre disposition convenable, est dessiné aisément en fonction d'un cahier des charges dépendant de l'application visée et est animé par un moteur 300. Le système à un bras oscillant 31 permet d'obtenir, en conjonction avec les dispositifs presseurs 2^{G} et 2^{D}, une action de l'appareil d'un bourrelet à l'autre.

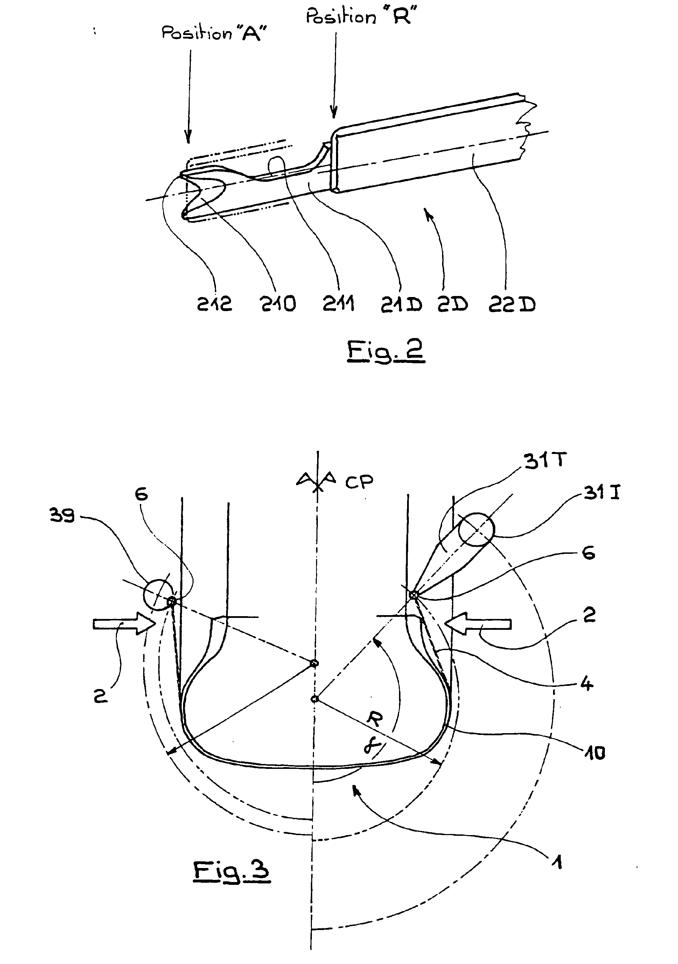

Les dispositifs presseurs 2^{G} et 2^{D} sont positionnés de façon appropriée pour jouer le rôle décrit dans la demande de brevet EP 0 580 055 précitée. A la figure 2, on voit plus particulièrement le presseur 2^{D} qui comporte une fourche 21^{D} et un marteau 22^{D}, tous deux mobiles entre une position reculée, en R (position éloignée du noyau 1), et une position avancée, en A. Ces positions sont notées A/R et R/A à la figure 1. On voit en trait discontinu le marteau en position avancée. En ce qui concerne les références aux figures, la convention utilisée est de désigner chacun des organes des presseurs par une référence principale, par exemple « 21 » pour la fourche, et de marquer l'appartenance spécifique au presseur d'un côté, le côté gauche ou le côté droit à la figure 1, par respectivement la lettre « ^{G} » ou « ^{D} » placée en exposant. Une référence sans marque spécifique renvoie de façon générique indifféremment à l'un ou l'autre des presseurs ou à leurs organes.

Le lecteur est à nouveau invité à consulter la partie adéquate de la description de la demande de brevet EP 0 580 055 précitée, pour un rappel des fonctions respectives de la fourche et du marteau 22, et pour un rappel des rôles respectifs des positions dites avancée A et reculée R. A la figure 2, on voit qu'aussi bien la fourche 21 que le marteau 22 ont l'allure de lames parallèles. La fourche 21 est, par rapport au marteau, toujours disposée radialement du côté de l'axe de rotation du noyau 1. Soulignons cependant que l'on peut adopter une disposition exactement inverse : le marteau 22 plus proche de l'axe de rotation que la fourche 21.

La fourche 21 a un bec 210 en « V », permettant de prendre et de centrer le fil 4. Pendant la phase de préhension, le plan formé par le « V » est disposé sensiblement perpendiculairement au fil 4. Lorsque le fil 4 doit être disposé radialement, cas de la figure 1, la lame formant la fourche 21 est orientée de façon tangente à un cercle concentrique au noyau 1. La fourche 21 comporte aussi un évidemment 211 dont le rôle apparaîtra ci-dessous.

La fourche 21 est destinée à emporter le fil 4 contre le noyau 1, puis à l'y maintenir. A cette fin, son avance vers le noyau 1 est déclenchée lorsque l'orifice 6 a amené le fil 4 à une extrémité du mouvement en va-et-vient, c'est à dire lorsque l'appareil est sensiblement dans la configuration de la figure 1. La fourche 21 est arrêtée lorsqu'elle a ancré le fil dans le caoutchouc revêtant le noyau 1. Ladite fourche 21 permet donc de plaquer le fil 4 avec une force suffisante pour qu'il adhère correctement à l'endroit souhaité.

Compte tenu du pas de pose souhaité, lui-même fonction du mouvement de rotation du noyau 1 schématisé par la flèche F, la poursuite du mouvement du système à bras oscillant 3 provoque la formation d'une boucle autour de la pointe 212, ce qui amorce la dépose d'un nouvel arceau 40 sur le noyau 1 (voir figure 1). Et le passage de l'orifice 6 au-delà de la fourche 21 en phase de retour est permis par l'évidemment 211, bien que la fourche 21 soit plaquée contre le noyau 1 dans cette phase de la fabrication. Signalons que la taille de la boucle est fonction de la dimension de la pointe 212.

Le marteau 22 intervient après la fourche 21 et après la phase dite de retour de l'orifice 6. Dans l'exemple considéré ici, le marteau 22 appuie sur le fil 4 à une position radiale un peu plus élevée. De préférence, il retient encore le fil 4 pendant que l'on rétracte la fourche 21. Le maintien du marteau pendant que la fourche se rétracte aide à éviter que la fourche 21 n'emporte avec elle la boucle de fil 4 qui s'est formée autour d'une de ses pointes 212, et qui même si elle est collée sur le caoutchouc, pourrait avoir tendance à rester solidaire de la fourche. L'ancrage du fil 4 dans le bourrelet s'en trouve parfaitement fiabilisé.

Bien entendu, le mouvement en position avancée, et le retour en position reculée, aussi bien pour la fourche 21 que pour le marteau 22 (voir double flèches A/R et R/A à la figure 1), sont commandés en synchronisme avec le système à bras oscillant 3, par tout dispositif convenable (renvoi de mouvement de l'arbre 3D par une transmission mécanique appropriée, par exemple à courroies ou à câble ou par synchronisation électrique entre plusieurs moteurs).

La figure 1 montre aussi que le fil 4 est amené jusqu'à une poulie folle 301 située sensiblement sur l'axe géométrique de rotation 31R du bras oscillant. Ensuite, le fil pénètre et chemine à l'intérieur du bras oscillant 31, ledit bras étant creux.

Le bras oscillant 31 fait décrire à l'orifice 6 un mouvement survolant le noyau 1, et même le contournant. Le système à bras oscillant 31 fait parcourir à l'orifice 6 un mouvement dans un plan, le « plan de mouvement ». Il convient de soigner la réalisation des rebords de l'orifice 6 pour ne pas blesser le fil 4, car le brin de sortie de celui-ci se dispose généralement sensiblement dans le plan de mouvement, c'est à dire dans un plan qui est perpendiculaire à l'axe de rotation 31R.

A la figure 3, l'angle α représente la position instantanée du bras oscillant 31. L'angle α varie sur une amplitude suffisante pour que le fil déposé atteigne les zones d'extrémité de trajectoire. Il convient que l'orifice 6 aille au delà de l'endroit où intervient le dispositif presseur 2. On voit que l'orifice 6 de l'arbre 31, au bout du bec 31T, s'approche de la surface de dépose du fil aussi prêt que souhaitable. Le fil 4 est lui-même très proche de la couche de caoutchouc 10 tout le long du flanc, et notamment à l'endroit où il est pris en charge par les presseurs 2. On voit que la partie intermédiaire 31I n'interfère pas avec la forme 1. Le bec 31T permet malgré tout de positionner l'orifice 6 tout proche du bourrelet.

La partie gauche de la figure 3 illustre un appareil à bras unique 39, parallèle à l'axe géométrique de rotation dudit bras 39, et dépourvu de bec. L'orifice 6 est disposé directement à l'extrémité de la partie parallèle à l'axe géométrique de rotation. On voit que l'appareil sans bec ne permet pas de s'approcher aussi prêt de l'extrémité de la trajectoire d'un arceau de fil déposé sur le noyau. On constate l'écart important du fil 4 par rapport à la surface de dépose, créant une difficulté pour la précision de dépose du fil 4.

L'orifice 6 de l'appareil selon l'invention décrit un mouvement de va-et-vient d'un bourrelet à l'autre, ou plus précisément d'un endroit proche d'un bourrelet, à un endroit proche de l'autre bourrelet. Le cycle de base du fonctionnement de appareil selon l'invention comporte les étapes suivantes :
- le fil étant retenu contre la forme pendant un temps suffisant, déplacer l'orifice (organe de guidage) dans un plan de mouvement d'orifice jusqu'à une première extrémité,
- appliquer le fil sur la forme à cette première extrémité et l'y maintenir au moins un temps suffisant, au moyen d'un dispositif presseur,
- répéter la première étape en sens inverse jusqu'à une deuxième extrémité,
- appliquer le fil sur la forme à cette deuxième extrémité et l'y maintenir, au moyen d'un autre dispositif presseur,
et répéter ainsi ce cycle de base jusqu'à déposer le nombre voulu d'arceaux à la surface de la forme, selon la trajectoire souhaitée pour le fil 4 à la surface de la forme, en déplaçant la forme en synchronisme avec le mouvement de l'organe de guidage.

Même si, dans cet exemple, l'orifice 6 décrit un mouvement dont le tracé est symétrique par rapport à au plan médian CP, et atteint le voisinage de chacune des zones de bourrelet définies sur le noyau 1, dans un mouvement parfaitement symétrique, cela n'est pas limitatif. Il n'est pas exclu que les extrémités du mouvement de l'orifice ne soient pas en des points symétriques par rapport au plan médian, par exemple pour fabriquer un pneumatique dont la trajectoire des arceaux ne serait pas symétrique. Ce serait le cas pour fabriquer un pneumatique dont les diamètres au seat (terme usuel pour désigner le siège de montage) de chacun des bourrelets sont différents.

L'exemple précédent (figure 1) illustre un appareil posant des tronçons de fils d'un bourrelet à l'autre bourrelet. On peut aussi réaliser ou utiliser des appareils agissant d'un bourrelet à une épaule, par exemple pour la fabrication d'une demi-carcasse. Il est en effet connu que la carcasse d'un pneumatique radial peut ne pas être continue d'un bourrelet à l'autre, mais peut être interrompue quelque part sous la bande de roulement. Le renfort de carcasse est alors déposé entre le bourrelet et une épaule. Un appareil selon l'invention pourrait tout aussi bien être utilisé pour une action d'un bourrelet jusqu'à n'importe quel point sous la bande de roulement, y compris jusqu'à l'épaule opposée, avec un certain degré de chevauchement des demi-carcasses l'une sur l'autre.

Rappelons que l'orifice 6 de l'appareil selon l'invention est animé d'un mouvement cyclique dans un plan, appelé ici « plan de mouvement ». Le noyau 1 est entraîné en rotation autour de son axe pendant que l'orifice 6 effectue ses va-et-vient dans le plan de mouvement d'orifice. Bien entendu, le mouvement du noyau 1 est en synchronisme avec le mouvement de va-et-vient de l'orifice. La trajectoire réelle des arceaux 40 du fil 4 est donc à la fois fonction de la position fixe relative (qui peut être inclinée) entre le plan de mouvement d'orifice et le noyau, et est fonction du mouvement relatif entre le noyau 1 et le va-et-vient de l'orifice 6.

Dans l'exemple décrit, la trajectoire de l'arceau 40 est sensiblement radiale parce qu'on y décrit la réalisation d'une carcasse pour un pneumatique radial, sans que bien entendu cela ne soit limitatif. Le plan de mouvement pourrait aussi former un angle quelconque, par exemple de l'ordre de 75°, par rapport à un plan perpendiculaire à l'axe de rotation du noyau 1, selon les conventions usuelles pour mesurer les angles dans le domaine du pneumatique. Les dispositifs presseurs 2^{G} et 2^{D} agissent dans le même plan de dépose.

Pour réaliser une carcasse croisée dans les flancs, on peut éloigner le plan de mouvement d'orifice d'une orientation purement radiale, par inclinaison du support des organes de pose (comme le boîtier 30) autour d'un axe parallèle à l'axe de rotation du noyau 1. On peut encore, sans rien changer aux organes de l'appareil tel que décrit, changer l'azimut du noyau d'un angle important, par exemple 1/8 de tour pour un va-et-vient du système à bras oscillant 31, de sorte que l'on obtient un angle de pose du fil qui est fonction du rapport des déplacements (alors que dans l'exemple précédent, la vitesse du noyau 1 n'agissait que sur le seul pas de pose).

La remarque suivante explique une variante possible. On peut animer le support des organes de pose (comme le boîtier 30 - voir figure 1) d'un mouvement alternatif dans le but d'infléchir la trajectoire de pose du fil 4 sur le noyau 1. On peut par exemple animer le support des organes de pose d'un mouvement de translation alternatif (voir double flèche P à la figure 1) permettant de translater le plan de mouvement d'orifice selon une direction perpendiculaire au plan de mouvement. On peut aussi animer le support des organes de pose d'un mouvement d'oscillations autour d'un axe géométrique perpendiculaire à la surface de la forme, compris dans le plan de mouvement et coupant l'axe géométrique de rotation du bras oscillant (voir double flèche Q autour de l'axe M-M à la figure 1), permettant de faire osciller le plan de mouvement autour d'un axe parallèle audit plan de mouvement. On peut encore animer le support des organes de pose d'un mouvement d'oscillations autour de tout axe parallèle au précédent. Il faut bien distinguer une telle conception d'un simple réglage fixe (également possible et utile dans certains cas) de l'angle que fait le boîtier 30 autour de l'axe MM. Cela donne un degré de liberté supplémentaire pour agir sur la forme exacte de la trajectoire du fil 4.

L'ensemble des organes de pose, à savoir le système à bras oscillant 31 et les dispositifs presseurs 2, y compris le moteur et le mécanisme d'entraînement, forme un sous-ensemble pouvant facilement être présenté au noyau de façon appropriée, et pouvant être escamoté pour par exemple présenter au noyau d'autres dispositifs utilisés pour la fabrication d'un pneumatique ou pour l'évacuation du noyau vers d'autres postes de confection d'un pneumatique.

## Revendications

1. Appareil de fabrication d'un renforcement pour pneumatique, ledit appareil étant destiné à fabriquer un renforcement constitué à partir d'un fil (4) délivré en continu et à la demande par un distributeur approprié, ledit appareil étant destiné à être utilisé en coopération avec une forme (1) sensiblement toroïdale sur laquelle on construit progressivement ledit renforcement en déposant des arceaux dudit fil selon une trajectoire souhaitée pour ledit fil à la surface de ladite forme,
ledit appareil comprenant :
• un organe de guidage (6) dans lequel le fil peut coulisser librement,
• un bras (31) oscillant unique monobloc, en mouvement autour d'un axe géométrique de rotation (31R), l'extrémité dudit bras supportant ledit organe de guidage,
• une commande pour conférer audit bras oscillant un mouvement d'oscillation de sorte que l'organe de guidage est transporté selon un mouvement cyclique décrit dans un plan de mouvement, en va-et-vient, pour amener l'organe de guidage en cycles successifs au voisinage de chacune des extrémités souhaitées pour le fil dans ladite trajectoire,
• des presseurs (2G et 2D) proches de chaque extrémité de ladite trajectoire, pour appliquer le fil sur la forme auxdites extrémités, agissant en synchronisme avec ledit mouvement cyclique de l'organe de guidage,
**caractérisé en ce que**
ledit bras comporte, dans sa partie terminale, un bec (31T) recourbé vers ledit axe géométrique de rotation (31R), ledit bec supportant directement l'organe de guidage (6), de façon à rapprocher l'organe de guidage de ladite forme au moins dans la configuration prise par l'appareil lorsque l'organe de guidage est proche de l'extrémité de ladite trajectoire.

2. Appareil selon la revendication 1, dans lequel le bras oscillant unique monobloc (31) est monté sur un arbre oscillant (3D) d'axe géométrique de rotation (31R).

3. Appareil selon la revendication 2, dans lequel le bras oscillant unique monobloc (31) est monté sur un passage (3D1) aménagé sur l'arbre (3D), de façon à permettre de modifier la position relative du bras oscillant (31) sur l'arbre (3D).

4. Appareil selon la revendication 1 ou 2, dans lequel l'axe géométrique de rotation du bras unique monobloc coupe la forme en position de travail.

5. Appareil selon l'une des revendications 1 à 3, dans lequel la base (310) dudit bras (31) est sensiblement orienté perpendiculairement à l'axe géométrique de rotation dudit bras, le bras (31) ayant au moins une partie intermédiaire (31I) orientée sensiblement parallèlement à l'axe géométrique de rotation du bras.

6. Appareil selon l'une des revendications 1 à 4, dans lequel l'organe de guidage est constitué par un orifice (6) à l'extrémité du bras oscillant, ledit bras étant creux et parcouru par ledit fil.

## Claims

1. Apparatus for producing a tyre reinforcement, the said apparatus being intended to produce a reinforcement formed from a thread (4) delivered continuously and on request by an appropriate dispenser, the said apparatus being intended to be used in cooperation with a substantially toroidal form (1) on which the said reinforcement is progressively constructed by laying hoops of the said thread on a desired path for the said thread on the surface of the said form,
the said apparatus comprising:
• a guiding member (6) in which the thread can slide freely,
• a single monobloc oscillating arm (31), moving about a geometrical axis of rotation (31 R), the end of the said arm supporting the said guiding member,
• a control for imparting an oscillatory movement to the said oscillating arm so that the guiding member is transported in a cyclical movement described in a movement plane, to and fro, in order to bring the guiding member in successive cycles into the vicinity of each of the desired ends for the thread in the said path,
• pressers (2G and 2D) close to each end of the said path, for applying the thread to the form at the said ends, acting in synchronism with the said cyclical movement of the guiding member,
**characterised in that**
the said arm comprises, in its terminal part, a spout (31T) curved towards the said geometrical axis of rotation (31R), the said spout directly supporting the guiding member (6) so as to bring the guiding member close to the said form at least in the configuration assumed by the apparatus when the guiding member is close to the end of the said path.

2. Apparatus according to Claim 1, in which the single monobloc oscillating arm (31) is mounted on an oscillating shaft (3D) of geometrical axis of rotation (31R).

3. Apparatus according to Claim 2, in which the single monobloc oscillating arm (31) is mounted in a passage (3D1) formed in the shaft (3D), so as to make it possible to modify the relative position of the oscillating arm (31) on the shaft (3D).

4. Apparatus according to Claim 1 or 2, in which the geometrical axis of rotation of the single monobloc arm intersects the form in the working position.

5. Apparatus according to one of Claims 1 to 3, in which the base (310) of the said arm (31) is substantially oriented perpendicularly to the geometrical axis of rotation of the said arm, the arm (31) having at least one intermediate part (311) oriented substantially parallel to the geometrical axis of rotation of the arm.

6. Apparatus according to one of Claims 1 to 4, in which the guiding member consists of an orifice (6) at the end of the oscillating arm, the said arm being hollow and having the said thread passing though it.

## Patentansprüche

1. Vorrichtung zur Herstellung einer Verstärkung für Reifen, die dazu dient, eine Verstärkung aus einem kontinuierlich und nach Bedarf von einem geeigneten Verteiler gelieferten Draht (4) herzustellen, wobei die Vorrichtung mit einer im Wesentlichen wulstförmigen Form (1) zusammenwirken kann, auf der nach und nach die Verstärkung durch Verlegen von Drahtbögen entlang einer gewünschten Bahn auf der Oberfläche der Form gebildet wird,
wobei die Vorrichtung Folgendes aufweist:
- ein Führungsorgan (6), in dem der Draht frei gleiten kann,
- einen einstückigen, einzigen Schwingarm (31), der sich um eine geometrische Rotationsachse (31 R) bewegt, wobei das Ende des Arms das Führungsorgan trägt,
- eine Steuerung, um den Schwingarm in eine Schwingung zu versetzen, sodass das Führungsorgan mit einer zyklischen Bewegung in einer Bewegungsebene in eine Hin- und Herbewebung versetzt wird, um das Führungsorgan in aufeinanderfolgenden Zyklen in die Nähe jedes der für den Draht gewünschten Enden in der Bahn zu bringen,
- Andrückmittel (2G und 2D) in der Nähe jedes Endes der Bahn, die den Draht an den Enden gegen die Form drücken und synchron mit der zyklischen Bewegung des Führungsorgans wirken,
**dadurch gekennzeichnet, dass** der Arm in seinem Endabschnitt einen zur geometrischen Rotationsachse (31 R) gebogenen Schnabel (31T) aufweist, der direkt das Führungsorgan (6) trägt, sodass dieses zumindest in der Konfiguration an die Form angenähert wird, die die Vorrichtung einnimmt, wenn sich das Führungsorgan in der Nähe des Endes der Bahn befindet.

2. Vorrichtung nach Anspruch 1, bei der der einstückige einzige Schwingarm (31) an einer Schwingwelle (3D) mit der geometrischen Rotationsachse (31 R) montiert ist.

3. Vorrichtung nach Anspruch 1, bei der der einstückige einzige Schwingarm (31) an einem Durchgang (3D1) an der Welle (3D) montiert ist, sodass sich die relative Position des Schwingarms (31) an der Welle (3D) verändern lässt.

4. Vorrichtung nach Anspruch 1 oder 2, bei der die geometrische Rotationsachse des einstückigen einzigen Arms die Form in der Arbeitsposition schneidet.

5. Vorrichtung nach einem der Ansprüche 1 bis 3, bei der die Basis (310) des Arms (31) im Wesentlichen senkrecht zur geometrischen Rotationsachse des Arms ausgerichtet ist, wobei der Arm (31) mindestens einen Zwischenabschnitt (31I) aufweist, der im Wesentlichen parallel zur geometrischen Rotationsachse des Arms ausgerichtet ist.

6. Vorrichtung nach einem der Ansprüche 1 bis 4, bei der das Führungsorgan aus einer Öffnung (6) am Ende des Schwingarms besteht, wobei der Arm hohl ist und der Draht durch ihn hindurchläuft.
